# EUROPÄISCHE PATENTSCHRIFT

(11) **EP 0 504 132 B1**
(45) Veröffentlichungstag und Bekanntmachung des Hinweises auf die Patenterteilung: **10.01.1996**
(21) Anmeldenummer: 92890052.1
(22) Anmeldetag: 10.03.1992
(51) Int. Cl.: C04B 35/10

(54) **Gesintertes, mikrokristallines keramisches Material**
Sintered microcrystalline ceramic material
Matériau céramique microcrystallin fritté

(30) Priorität: 11.03.1991 AT 520/91
(43) Veröffentlichungstag der Anmeldung: 16.09.1992
(73) Patentinhaber: Treibacher Schleifmittel Aktiengesellschaft, A-9523 Landskron (AT)
(72) Erfinder: Winkler, Herwig, Dr., A-9073 Klagenfurt (AT); Janz, Peter, Dr., A-9020 Klagenfurt (AT); Gottschamel, Georg, Dr., A-9330 Treibach (AT)
(74) Vertreter: Kliment, Peter

(56) Entgegenhaltungen:
- EP-A- 0 368 837
- JOURNAL OF THE AMERICAN CERAMIC SOCIETY, Band 57, Nr. 8, 1974, Columbus, OH (US); G.C. BYE et al., Seiten 367-371

## Beschreibung

Die vorliegende Erfindung betrifft ein gesintertes mikrokristallines keramisches Material auf der Basis von α-Al₂O₃, bestehend aus einer mikrokristallinen Matrix und 0.1 - 30 Vol.%, vorzugsweise 1 - 25 Vol.% und besonders vorzugsweise 1 - 15 Vol.%, in der Matrix eingelagerter whiskerähnlicher Nadeln bzw. Plättchen, wobei das keramische Material einen Zusatz von 0.01 bis 2 Gew.%, vorzugsweise 0.01 bis 0.5 Gew.% einer Cer-Verbindung enthält, welche im wesentlichen in den Whiskers vorliegt.

Weiters betrifft die vorliegende Erfindung ein Verfahren zur Herstellung eines keramischen Materials durch Einrühren eines hochdispersen α-Aluminiumoxidhydrats in eine verdünnte Säurelösung, Zugabe einer Cerverbindung im Ausmaß 0.01 - 2 Gew.-%, vorzugsweise 0.01 - 0.5 Gew.-% (gerechnet als CeO₂) bezogen auf den Aluminiumoxidgehalt, Entlüftung, Desagglomerierung, Trocknung und Zerkleinerung, sowie Durchführung eines mehrstufigen, teilweise unter Gasdruck stattfindenden Sintervorganges in einer nichtoxidierenden oder reduzierenden Atmosphäre.

Die grundlegenden Veröffentlichungen zur Herstellung von keramischem Material aus α-Al₂O₃ sind in der EP 368 837 A bereits angeführt worden.

Das US-Patent Nr. 4 744 802 gibt die Möglichkeit an, einem mit Keim-Partikeln aus α-Fe₂O₃ vermischten Sol zusätzlich eine chromhältige Verbindung zuzusetzen. Es ist aus der Literatur bekannt, daß Chrom(III)oxid bei hohen Temperaturen Mischkristalle mit α-Al₂O₃ bildet.

Die EP 395 091 A beschreibt den Zusatz von Chromoxid als Keimbildner alternativ zum α-Al₂O₃ bzw. α-Fe₂O₃. Daß in der Literatur unterschiedliche Meinungen zur Wirkung von Chromverbindungen auf die Umwandlung von Übergangsaluminiumoxiden zu α-Al₂O₃ vertreten werden, liegt vermutlich an dem Redox-Verhalten von Chromoxid. G.C. Bye beschreibt in seiner Arbeit "Influence of Cr and Fe on Formation of α-Al₂O₃ from gamma-Al₂O₃" (J.Amer.Cer.Soc.57(1974) S.367-371) neben der beschleunigenden Wirkung des Fe₂O₃ die verzögernde Wirkung von Cr(VI) auf die Bildung von α-Al₂O₃. Gleichzeitig weist er jedoch auf die Möglichkeit hin, daß die von ihm zwischen 800 und 900°C gefundenen hexagonalen Cr(III)oxidkristalle eine Keimwirkung auf die Entstehung des Kornmischkristalls haben können.

Die EP 368 837 A beschreibt ein keramisches Material, das neben α-Al₂O₃ whiskerähnliche Nadelkristalle enthält. Die Nadeln enthalten auch Cer.

Aufgabe der Erfindung ist es, ein keramisches Material zu schaffen, das sich unter anderem als Schleifmittel eignet und aufgrund seiner besonderen chemischen Zusammensetzung und Struktur eine besonders hohe Zähigkeit bei gleichzeitig vorhandener hoher Härte besitzt.

Dieses Ziel wird erfindungsgemäß dadurch erreicht, daß das keramische Material einen Zusatz von 0.01 bis 15 Gew.%, vorzugsweise 0.1 bis 3 Gew.% einer Chrom-Verbindung in der α-Al₂O₃ - Matrix aufweist. Die whiskerähnlichen Partikeln haben Durchmesser zwischen 0.2 und 1 µm und Längen zwischen 1 und 20 µm. Die Härte dieses Mischkristalles ist höher als die von reinem α-Al₂O₃. Die Matrix hat eine vorzugsweise Kristallitengröße von unter 0.5 µm und ein sehr gleichmäßiges Gefüge.

Transmissionselektronenmikroskopische Untersuchungen zeigten, daß die eingelagerten Partikel als nadelförmige Whisker vorliegen bzw. zum Teil oder gänzlich auch als Plättchen ausgebildet sein können. Die jeweiligen Mengen hängen sicherlich auch von den Entstehungsbedingungen ab.
Die Partikel werden der Einfachheit halber als Whisker bezeichnet, wobei darin auch einkristalline Plättchen miteingeschlossen sein sollen. Die Dicke der Plättchen entspricht dabei dem Whiskerdurchmesser, die Abmessungen senkrecht dazu der Whiskerlänge.

Die Whisker bestehen nach TEM-Untersuchungen aus einer Ce-Al-Oxid-Verbindung vom Typ des β-Korunds. Ein Teil der Al-Ionen wird durch Cr ersetzt, weiters werden Ca und andere Erdalkali- bzw. Alkali-Ionen in unterschiedlichen Mengen ins Kristallgitter eingebaut. Bei der Entstehung wird der Matrix Ca bzw. andere Erdalkali- und Alkali-Ionen entzogen, wodurch die Festigkeit erhöht wird, da die Menge an Korngrenzenverunreinigungen abnimmt, die sowohl als kristalline als auch als Glasphase die Festigkeit herabsetzen. Der Ca- bzw. Erdalkali- und Alkaligehalt kann ohne Festigkeitseinbuße bis 1 % betragen. Möglicherweise ist ein geringer Ca-Gehalt für die Whiskerbildung sogar notwendig. Der Ca-Gehalt in den Partikeln ist gegenüber der Matrix stark erhöht, sodaß ein beträchtlicher Reinigungseffekt in bezug auf die Matrix eintritt.

Der Einbau von Cr ins Gitter der Whisker bewirkt eine Erhöhung der Härte des Ce-Aluminats; β-Korund-Strukturen haben ja eine wesentlich niedrigere Härte als α-Al2O3.

Die Festigkeit der erfindungsgemäßen keramischen Formkörper oder Schleifkörper, die z.B. wie bei Diamantschleifkorn üblich als Druckfestigkeit geprüft werden kann, wird dadurch erhöht (siehe auch Beispiele). Die höhere Härte und Festigkeit der Whisker durch den Einbau von Cr verbessert den Pull-out-effekt und die Rißablenkungsmechanismen.

Die Schleifleistung wird vermutlich außerdem noch durch einen Selbstschärfeffekt erhöht. Die Rißablenkung an den Nadeln kann zur Ausbildung neuer, scharfer Bruchkanten beitragen. Die Größe der abgebrochenen Bruchstücke wird vermutlich hauptsächlich vom Abstand der Nadeln voneinander bestimmt. Für bestimmte Anwendungen könnte also das Verschleißverhalten durch Variation der Nadelkonzentration (Anzahl/Volumseinheit) angepaßt und optimiert werden.

Vorzugsweise werden zur α-Aluminiumoxidhydratsuspension neben dem Cer- und Chromzusatz noch Keimbildner zugegeben.

Keimbildner sind feinste Partikel, die aus α-Al2O3, Diaspor, AlF3, α-Fe2O3, V2O3, Co2O3, Nb2O3, Ce2O3, Gamma-Al2O3, Ga2O3, GaOOH, FeOOH, Ti2O3, Cr2O3 bestehen. Auch lösliche oder unlösliche Vorstufen können zugesetzt werden, das sind Verbindungen, die sich beim Erhitzen des getrockneten Materials in die oben genannten Oxide umwandeln, bevor die normale Keimbildung des α-Al2O3 einsetzt (d.h. bei tieferen Temperaturen). Es können auch Mischungen bzw. Kombinationen der genannten Oxide oder Vorstufen verwendet werden, ebenso auch vorgebildete Mischkristalle.

Der Keimbildner wird in einer Menge bis 5 Gew%, bezogen als Oxid auf das Endprodukt, zugesetzt. Es wurde nämlich festgestellt, daß ein so hergestelltes Material verbesserte Eigenschaften aufweist. Der Grund dafür liegt vermutlich an dem erhöhtem Verhältnis von Länge zu Durchmesser der whiskerähnlichen Nadeln, der Durchmesser der Nadeln wird geringer bei gleicher Länge, gleichzeitig steigt die Anzahl der Nadeln je Volumseinheit an.

Eine Erhöhung des Zusatzes von Keimbildnern über 5 Gew% brachte keinerlei Verbesserung der Eigenschaften. Der Keimbildner kann in Form einer Suspension von feinsten Partikeln der Böhmitsuspension zugesetzt werden. Hergestellt wird eine solche Keimbildnersuspension aus handelsüblichem Pulver durch Mahlung und Sedimentation oder jedes andere Verfahren, welches ein submikrones Pulver ergibt. Selbstverständlich kann der Keimbildner auch in fester Form vor oder nach der Desagglomeration zugestzt werden.

Für die Bildung der mikrokristallinen Struktur ist ein Zusatz von Magnesiumnitrat oder einer anderen Mg-haltigen Verbindung zur α-Aluminiumoxidhydratsuspension vorteilhaft.

Erfindungsgemäß wird bei einem die eingangs genannten Verfahrensschritte aufweisenden Verfahren zur Herstellung eines keramischen Materials zur Suspension eine Chromverbindung im Ausmaß von 0.01 bis 15 Gew.%, vorzugsweise 0.1 bis 3 Gew.%, bezogen auf das α-Al₂O₃, zugegeben. Dabei wird der Sinterprozeß so geführt, daß sich neben einer mikrokristallinen Matrix nadelförmige Kristalle ausbilden.

Der Chrom- und Cerzusatz kann in Form von anorganischen oder organischen Salzen erfolgen, jedoch auch in jeder anderen Verbindung, die sich fein verteilen bzw. lösen läßt, wie Oxide oder Hydroxide. Auch die Zugabe von fertigem Cr₂O₃ ist vorteilhaft. Sie bewirkt gleichzeitig eine höhere Feinheit und Homogenität der chemischen Zusammensetzung der Matrix und der Whisker bei höherer Dichte (geringere Porosität) des Materials.

Die Desagglomeration kann in einem Dispergiergerät nach Rotor-Stator-Prinzip durchgeführt werden. Es können aber auch andere Dispergiergeräte wie bespielsweise Rührwerkskugelmühlen verwendet werden, allerdings ist dabei ein größerer Mahlkörperabrieb oder Metallabrieb der Qualität des Produktes abträglich.

Als hochdisperse α-Aluminiumoxidhydrate können die im Handel befindlichen Pseudoböhmite (Pural, Disperal, Versal) mit einem Reinheitsgrad von über 99 % und einer spezifischen Oberfläche zwischen 150 und 290 m2g verwendet werden. Der Feststoffgehalt der Suspension lag zwischen 5 und 40 Gew%, vorzugsweise zwischen 15 und 25 Gew%. Als Peptisatorsäure können Salpetersäure, Salzsäure, Ameisensäure oder Essigsäure eingesetzt werden.

Die Trocknung wird in einem Dünnschichtverdampfer mit angeschlossenem Bandtrockner durchgeführt. Es kann aber jeder andere Trocknungsapparat verwendet werden, der eine Durchmischung des Gutes in der Trocknungphase erlaubt, sodaß keine Entmischung mehr möglich ist. Das ist erforderlich, um die gewünschte homogene Verteilung der Nadeln im Endprodukt zu erreichen. Die dabei gebildete Porenstruktur des getrockneten Materials scheint der Bildung der Nadeln förderlich zu sein, da wesentlich weniger Nadeln entstehen, wenn früher getrocknet wird.

Vorzugsweise wird die Trocknung in einem mit Mikrowellen beheizten Bandtrockner durchgeführt. Die dabei auftretende Erwärmung des Gutes vom Inneren her bewirkt eine sehr gute Homogenität der getrockneten Produkte, was Porenstruktur und chemische Zusammensetzung betrifft. Die Whiskerbildung und die Sinteraktivität werden dadurch gefördert und damit die Eigenschaften des fertigen Produktes verbessert.

Das getrocknete Material wird zerkleinert und gesiebt. Das erzielte Korn kann entweder direkt zu Schleifkorn gesintert werden oder es wird in entsprechend feiner Form als Pulver mit organischen Bindemitteln zu Formteilen gepreßt. Dazu eignen sich alle bekannten Preßverfahren wie z.B. Matrizenpressen, Strangpressen, oder Walzenpressen.

Das getrocknete bzw. verpreßte Material wird anschließend gesintert. Die Sinterung erfolgt in mehreren Stufen. Die Sinterzeiten hängen von der Temperatur ab und liegen zwischen einigen Minuten und mehreren Stunden je Stufe. Der mehrstufige Sinterprozeß weist vier Stufen auf, von denen die erste und die vierte Druckstufen mit erhöhtem Gasdruck zwischen 1 und 1000 bar, vorzugsweise 50 bis 100 bar, sind. Zuerst wird bei 500 - 800°C in der ersten Stufe die Austreibung des Restwassers und der aus Peptisatorsäure stammenden sauren Bestandteile bei gleichzeitiger Umwandlung des Cersalzes in das Oxid durchgeführt. In der zweiten Stufe, das ist die erste Druckstufe, wird der Druck auf 50 - 100 bar erhöht bei einer Temperatur von etwa 800°C, bis die Umwandlung in α-Al₂O₃ abgeschlossen ist, was im allgemeinen etwa 1 Stunde dauert. Die Temperatur darf auf max. 1150°C ansteigen. Dann wird der Druck abgesenkt und in der nächsten Stufe bei 1100 - 1300°C ohne Druck gesintert. In der vierten Stufe, das ist die zweite Druckstufe, wird dann das Material unter einem Druck von 50 - 100 bar bei Temperaturen zwischen 1250°C und 1400°C fertiggesintert.

Der mehrstufige Sinterprozeß kann prinzipiell in einem geeigneten Ofen durchgeführt werden, es hat sich jedoch als günstig erwiesen, wenn die erste Stufe, insbesondere wegen des Anfalls saurer Abgase in einem speziell dafür ausgekleideten Ofen durchgeführt wird.

Als weitere Variante des Verfahrens kann die Sinterung unter nichtoxidierenden bzw. reduzierenden Bedingungen durchgeführt werden, wodurch die intermediäre Bildung von CrO₃ bei ca. 300 bis 500°C verhindert wird. Die Bedingungen dürfen aber nicht zu einer Reduktion des Cr unter die 3-wertige Form führen.

Als weitere Variante des Verfahrens kann das vorcalcinierte Material mit Lösungen oder Suspensionen getränkt werden, dieses Verfahren ist aus der EP 394 213 A bekannt. Alle oben genannten Zusätze und Vorstufen der Keimbilnder können auf diese Art zugesetzt werden.

Das erfindungsgemäße Material ist hervorragend für Schleifzwecke geeignet, kann aber auch für alle bekannten Einsatzzwecke von Aluminiumoxidkeramik verwendet werden. Für den Einsatz in Schleifscheiben erwies sich eine Zerkleinerung des Materials vor dem Sintern als vorteilhaft, für den Einsatz in Bändern und flexiblen Scheiben ist eine Zerkleinerung nach dem Sintern günstiger.

Die Erfindung soll nun anhand von Beispielen näher erläutert werden.

### Beispiel 1: (Suspensionsherstellung)

In eine Lösung von 39,5 kg Wasser und 440 g conc. Salpetersäure wurden kontinuierlich 10 kg α-Aluminiumoxidhydrat der Marke Disperal (R) eingerührt. Die Suspension wurde dann in einer Laborvakuumentlüf-tungsanlage bei 100 mbar entlüftet und anschließend durch ein Dispergiergerät mit zwei Zuflußöffnungen gepumpt. Die Durchflußgeschwindigkeit betrug 3 l/h, die Rotordrehzahl lag bei 15000 Upm. An die zweite Zuflußöffnung des Dispergiergerätes wurde eine Lösung von 4,5 g/l Cer(III)nitrathexahydrat und 14 g/l Chrom-(III)nitratnonahydrat mit 300 ml pro Stunde zugepumpt.
Die desagglomerierte Suspension wurde dann in den Beispielen 2 - 6 weiterverarbeitet. Das gesinterte Endprodukt enthielt 0,1 Gew% CeO2 und 0,3 Gew% Cr2O3.

### Beispiel 2:

Die Suspension aus Beispiel 1 wurde unter Rühren eingedampft und nach der Koagulation in Polypropylentassen in einem Heißlufttrockner bei 80°C 36 Stunden zu spröden Platten getrocknet. Die getrockneten Platten wurden in einer Hammermühle zu Körnern zerkleinert und in einer Siebmaschine klassiert (Feinkornanteil < 0,1 mm - siehe Beispiel 5). Anschließend wurden die Körner eine Stunde in einem Muffelofen bei 600°C calciniert. Anschließend wurde das Material im Gasdrucksinterofen auf 900°C erhitzt. Als Gasatmosphäre wurde Stickstoff verwendet.
Nach Druckerhöhung auf ca. 100 bar wurde die Temperatur innerhalb einer Stunde auf 1100°C erhöht, dann wurde der Druck auf 1 bar abgesenkt und die Temperatur weiter auf 1300°C erhöht. Nach weiteren 1,5 h bei 1300°C wurde 15 min lang bei 100 bar fertiggesintert. Das Material hatte 3 Vol% Porosität und enthielt ca. 15 Vol% Whisker mit Durchmessern von 0,2 - 0,5 µm und einer Länge zwischen 3 und 5 µm.

Die chemische Zusammensetzung der Matrix und der Nadeln wurde mit dem Transmissionselektronenmikroskop - Energiedispersive Analyse (TEM - EDX) bestimmt. Die Matrix in der Nähe der Whisker enthielt außer Al2O3 und ca. 0,3% Cr2O3 keine Verunreinigungen. Die Whisker selbst enthielten ca. 1 Gew% CaO, 5 Gew% CeO2 und ca. 0,5 % Cr2O3.

### Beispiel 3:

Die Suspension von Beispiel 1 wurde im Mikrowellentrockner getrocknet. Die getrockneten Platten wurden wie in Beispiel 2 weiterverarbeitet. Das Material hatte 2 Vol% Porosität und enthielt 18 Vol% Whisker.

### Beispiel 4:

Das getrocknete Material von Beispiel 3 wurde nur grob zerkleinert und wie in Beispiel 2 gesintert. Nach dem Sintern erfolgte die Endzerkleinerung und Siebung.

### Beispiel 5:

Getrocknetes Feinkorn (< 0,1 mm) aus Beispiel 2 wurde mit ca. 25 Gew% H2O gemischt und zu Zylindern (30 mm ⌀, 5 mm Länge) verpreßt. Das Pressen erfolgte uniaxial in einer Matrize bei 400 MPa Die Zylinder wurden wie in Beispiel 2 gesintert. Das gesinterte Material hatte 2 Vol% Porosität und zeigte praktisch die gleiche Mikrostruktur mit Nadeln wie das Material von Beispiel 2. Die gesinterten Zylinder wurden zu Korn zerkleinert und gesiebt.

### Beispiel 6:

Die wie in Beispiel 3 gepreßten Zylinder wurden vor dem Sintern zerkleinert und gesiebt. Das gesiebte Korn wurde wie in Beispiel 2 gesintert.

### Beispiel 7:

Die α-Aluminiumoxidhydratsuspension wurde wie in Beispiel 1 hergestellt. Die zudosierte Lösung enthielt 17,9 g/l Cernitrathexahydrat, 5,6 g/l Magnesiumnitrathexahydrat und 14 g/l Chromnitratnonahydrat, sodaß im Endprodukt 0,4 Gew% CeO2, 0,3 % Cr2O3 und 0,05 % MgO enthalten waren. Die desagglomerierte Suspen-sion wurde wie in Beispiel 3 weiterverarbeitet. Das gesinterte Produkt enthielt 2 Vol% Poren und 20 Vol% Whisker.

### Beispiel 8:

In eine Lösung von 39,5 kg Wasser, 440 g conc. Salpetersäure, 78 g Cernitrathexahydrat, 205 g Chromnitratnonahydrat und 25 g Magnesiumnitrathexahydrat wurden 10 kg Disperal (R) eingerührt und entlüftet (wie in Beispiel 1). Die Suspension wurde in einer Rührwerkskugelmühle desagglomeriert, wobei der Mahlkörperabrieb (85-%ige Aluminiumoxidkugeln) weniger als 0,2 Gew%, bezogen auf Endprodukt, betrug. Die Suspension wurde wie in Beispiel 3 weiterverarbeitet. Das gesinterte Produkt enthielt 0,4 % CeO2, 1 % Cr2O3 und 0,05 % MgO.
Die Analyse der Matrix in der Umgebung der Whisker - mit TEM-EDX - zeigte neben Al2O3 nur ca. 0,9 % Cr2O3, kein Ca, Ce, K, Na und Mg. Die Whisker enthielten neben Al2O3 ca. 3 Gew% CaO, 11 Gew% CeO2 und ca. 1 % Cr2O3.

### Beispiel 9:

In eine Lösung von 39,5 kg Wasser, 440 g conc. Salpetersäure, 78 g Cernitrathexahydrat, 61 g Chromnitratnonahydrat und 25 g Magnesiumnitrathexahydrat wurden 10 kg Disperal (R) eingerührt. Die Suspension wurde wie in Beispiel 1 entlüftet und in der Rührwerkskugelmühle desagglomeriert. Nach der Trocknung im Mikrowellentrockner wurde das Material zerkleinert und gesiebt. Das gesiebte Korn wurde im Muffelofen bei 800°C vier Stunden lang vorcalciniert, anschließend in einem Durchlauf-Drehrohrofen auf 1650°C erhitzt (Verweilzeit in der heißen Zone ca. 10 min.), rasch abgekühlt und im Muffelofen bei 1300°C vier Stunden lang gesintert. Das gesinterte Material enthielt 0,4 % CeO2, 0,3 % Cr2O3 und 0,05 % MgO. Der Whiskergehalt betrug ca. 20 Vol%.

### Herstellung des Keimbildners

Eine Suspension von 6,5 kg Wasser und 3,5 kg Bayer-Tonerde mit 105 g conc. Salpetersäure wurde in einer Rührwerkskugelmühle gemahlen, bis der Median der Korngrößenverteilung 0,6 µm (bestimmt durch Sedigraph) betrug. Die Suspension wurde verdünnt (von 35 Gew% Al2O3 auf 20 Gew%) und durch Sedimentation von allen Teilchen > 0,2 µm befreit. Die entstandene feine Suspension enthielt 2 Gew% α-Al2O3 und wurde als keimbildender Zusatz verwendet.

Alternativ wurden 4 kg eines reinen Cr2O3-Pigments in 6 kg Wasser und 50 g conc. Salpetersäure eingerührt und in einer Rührwerkskugelmühle vermahlen. Gleich wie bei der Tonerde wurde die Suspension durch Sedimentation vom Grobanteil über 0,2 µm befreit. Die entstandene Suspension enthielt ca. 1,5 Gew% Cr2O3 und wurde in Beispiel 12 als keimbildender Zusatz verwendet.

Eine Suspension von 10 kg Disperal (R) wurde mit einer Lösung von 500 g conc. Salpetersäure und 10 kg Chromnitratnonahydrat in 39,5 kg Wasser in einem Laborkneter zu einer homogenen Masse (Gel) geknetet. Anschließend wurde das Gel im Muffelofen bei ca. 1200°C geglüht. Das geglühte Material wurde zerkleinert und wie die Tonerde zu einer feinen Suspension verarbeitet, die als keimbildender Zusatz in Beispiel 13 verwendet wurde. Die Suspension enthielt ca. 0,5 % Feststoff. Dieser hatte die Kristallstruktur des α-Al2O3-Cr2O3-Mischkristalls und hatte einen Cr2O3-Gehalt von ca. 25 Gew%.

Als weiteres Beispiel eines Keimbildners wurde handelsüblicher Diaspor wie die Tonerde zu einer feinen Suspension verarbeitet. Die Suspension hatte ca. 5 Gew% Al2O3-Gehalt und wurde in den Beispielen 18 - 21 als keimbildender Zusatz verwendet.

### Beispiel 10:

In 10 kg der Tonerde-Keimbildnersuspension wurden 29,5 kg Wasser, 500 g conc. Salpetersäure und 10 kg Disperal (R) eingerührt. Die Suspension wurde wie in Beispiel 1 entlüftet und desagglomeriert. Die zugepumpte Lösung enthielt 17,9 g/l Cernitrathexahydrat und 14 g/l Chromnitratnonahydrat. Die desagglomerierte Suspension wurde wie in Beispiel 3 weiterverarbeitet. Das gesinterte Material enthielt 0,4 Gew% CeO2 und 0,3 Gew% Cr2O3. Der Whiskergehalt betrug ca. 30 Vol%, die Whisker hatten Durchmesser von ca. 0,2 - 0,5 µm und Längen von 4 - 10 µm. Die Porosität war 1 Vol%.

### Beispiel 11:

Das gesinterte, gesiebte Material von Beispiel 10 wurde bei 900°C vorcalciniert und im Muffelofen bei 1300°C vier Stunden lang gesintert. Das gesinterte Material enthielt ca. 25 Vol% Whisker (Durchmesser 0,2 - 0,5 µm, Länge 3 - 8 µm).

### Beispiel 12:

In 13 kg der Cr2O3-hältigen Suspension wurden 26,5 kg Wasser, 500 g conc. Salpetersäure und 10 kg Disperal (R) eingerührt. Die Suspension wurde wie in Beispiel 1 entlüftet und desagglomeriert. Die zugepumpte Lösung enthielt 4,5 g/l Cernitrathexahydrat, 14 g/l Chromnitratnonahydrat und 5,6 g/l Magnesiumnitrathexahydrat. Die Suspension wurde wie in Beispiel 3 weiterverarbeitet. Das gesinterte Produkt enthielt 0,1 Gew% CeO2, ca. 3 Gew% Cr2O3 und 0,05 Gew% MgO. Die Whisker enthielten neben Al2O3 ca. 3 Gew% CaO, 5 Gew% CeO2 und 2 Gew% Cr2O3.

### Beispiel 13:

In 40 kg der feinen Mischkristallsuspension wurden 500 g conc. Salpetersäure und 10 kg Disperal eingerührt. Die Suspension wurde wie in Beispiel 1 entlüftet und desagglomeriert. Die zugepumpte Lösung enthielt 4,5 g/l Cernitrathexahydrat. Die Suspension wurde im Mikrowellentrockner getrocknet, zerkleinert und gesiebt. Das gesiebte Korn wurde bei 900°C vorcalciniert und im Muffelofen bei 1300°C vier Stunden lang gesintert. Das gesinterte Produkt enthielt 0,1 Gew% CeO2 und 0,65 Gew% Cr2O3.

### Beispiel 14:

In eine Lösung von 39,5 kg Wasser, 440 g conc. Salpetersäure, 196 g Cernitrathexahydrat und 20,3 g Chromnitratnonahydrat wurden 10 kg Disperal (R) eingerührt. Die Suspension wurde in einer Rührwerkskugelmühle desagglomeriert. Die desagglomerierte Suspension wurde wie in Beispiel 13 weiter-verarbeitet. Das gesinterte Material enthielt ca. 1 % CeO2 und 0,1 Gew% Cr2O3. Neben 20 Vol% Whiskern enthielt es noch CeO2-Ausscheidungen.

### Beispiel 15: (ohne Cr)

Die Suspension wurde analog dem Beispiel 10 hergestellt. Die zudosierte Lösung enthielt jedoch kein Chrom. Die weitere Verarbeitung entsprach ebenfalls dem Beispiel 10. Das gesinterte Produkt enthielt ca. 0,4 Gew% CeO2.

### Beispiel 16: (ohne Cr)

Das Material wurde analog dem Beispiel 15 hergestellt, jedoch erfolgte die Zerkleinerung und Siebung erst nach dem Sintern.

### Beispiel 17:

In 5 kg der Tonerde-Keimbildnersuspension wurden 34,5 kg Wasser, 500 g conc. Salpetersäure und 10 kg Disperal eingerührt. Die Suspension wurde wie in Beispiel 1 entlüftet und desagglomeriert. Die zugepumpte Lösung enthielt 17,9 g/l Cernitrathexahydrat, 245 g/l Chromnitratnonahydrat und 5,6 g/l Magnesiumnitrathexahydrat. Die desagglomerierte Suspension wie in Beispiel 13 weiterverarbeitet. Das gesinterte Produkt enthielt 0,4 Gew% CeO2 und 5 Gew% Cr2O3.

### Beispiel 18:

In 4 kg der diasporhältigen Keimbildnersuspension wurden 35,4 kg Wasser, 500 g conc. Salpetersäure und 10 kg Disperal (R) eingerührt. Die Suspension wurde wie in Beispiel 1 entlüftet und desagglomeriert. Die zugepumpte Lösung enthielt 17,9 g/l Cernitrathexahydrat, 14 g/l Chromnitratnonahydrat und 5,6 g/l Magnesiumnitrathexahydrat. Die desagglomerierte Suspension wurde analog Beispiel 17 weiterverarbeitet.

### Beispiel 19:

Die Suspension wurde wie in Beispiel 18 hergestellt, entlüftet und desagglomeriert. Die zugepumpte Lösung enthielt 0,9 g/l Cernitrathexahydrat und 52 g/l Calcium-nitrat. Die weitere Verarbeitung erfolgte wie in Beispiel 3. Das gesinterte Material enthielt 0,02 % CeO2 und 1 % CaO. Die Whisker enthielten ca. 2 % CeO2 und 10 % CaO.

### Beispiel 20:

Die Herstellung erfolgte analog Beispiel 19, jedoch enthielt die zugepumpte Lösung 17,9 g/l Cernitrathexahydrat, 47 g/l Chromnitratnonahydrat und 52 g Calciumnitrat. Das gesinterte Material enthielt 0,4 % CeO2, 1 % Cr2O3 und 1 % CaO. Die Whisker enthielten ca. 7 % CeO2, 10 % CaO und 2 % Cr2O3.

### Beispiel 21:

Die Herstellung war analog Beispiel 19, jedoch wurde die Zerkleinerung und Siebung nach der Sinterung durchgeführt.

### Beispiel 22:

Das nach Beispiel 15 hergestellte, getrocknete Material wurde zerkleinert, gesiebt undbei 1200°C im Muffelofen vier Stunden lang geglüht. Das abgekühlte Korn wurde evakuiert und mit einer Lösung von 100 g/l Chromnitratnonahydrat überschichtet. Nach dem Belüften wurde das Korn von der Restlösung abfiltriert und getrocknet.
Die Sinterung erfolgte nach Beispiel 20. Das gesinterte Material enthielt 0,4 % CeO2 und 0,4 % Cr2O3.

### Beispiel 23:

Das nach Beispiel 15 hergestellte, getrocknete Material wurde zerkleinert, gesiebt und bei 1000°C im Muffelofen acht Stunden lang geglüht. Das abgekühlte Material wurde evakuiert und mit der aus Beispiel 17 stammenden, desagglomerierten Suspension überschichtet. Nach dem Belüften wurde das Korn von der Suspension abgetrennt und getrocknet. Das Korn wurde dann im Muffelofen bei 1300°C vier Stunden lang gesintert. Das gesinterte Material enthielt ca. 1 % Cr2O3 und 0,4 % CeO2.

### Beispiel 24:

analog Beispiel 10, jedoch wurde nach der Sinterung zerkleinert.

### Beispiel 25:

Das getrocknete, gesiebte Material von Beispiel 7 wurde bei 1600°C im Drehrohrofen geglüht (Verweilzeit ca. 15 min.). Anschließend wurde rasch abgekühlt und bei 1250°C vier Stunden lang im Muffelofen fertiggesintert.

### Beispiel 26:

Das getrocknete, gesiebte Material von Beipiel 7 wurde bei 800°C vier Stunden lang vorcalciniert und anschließend im Muffelofen bei 1300°C vier Stunden lang gesintert Während des Sinterns strömte ein Gemisch von 90 Vol% Stickstoff mit 10 Vol% Wasserstoff durch den Ofen.

Die in den Beispielen beschriebenen Materialien wurden auf Porosität, Whiskergehalt und Druckfestigkeit geprüft. Die Porosität wurde mit dem Quecksilberpyknometer gemessen.
Die Druckfestigkeit der Schleifkörner wurde wie folgt geprüft: Die Körner wurden gesiebt auf die Fraktion 0,5 - 0,6 mm, die gesiebte Fraktion wurde auf einem Rütteltisch von allen länglichen Körnern befreit und die Restmenge (kubische Kornform) in einem speziell dafür eingerichteten Diamantpreßwerkzeug zerdrückt, wobei jedes Korn für sich zerdrückt wird und die dafür nötige Kraft gemessen wird. In der Tabelle sind die Medianwerte der gemessenen Kraft-Anzahlverteilung angeführt.

Von metallografischen Schliffen wurden im Rasterelektronenmikroskop Bilder angefertigt. An diesen wurde der Whiskergehalt und ihre Dimensionen vermessen. Dabei wurde ein Mittelwert über 20 Körner gebildet. Aufgrund der Entmischung beim Trocknen ist der Whiskergehalt Schwankungen unterworfen, die überwiegende Zahl der Körner enthält jedoch die in den Tabellen angegebenen Whiskermenge.

Die nach den in den Beispielen beschriebenen Verfahren hergestellten Materialien wurden zu Schleifscheiben, Fiberscheiben und Schleifbändern verarbeitet. Die im folgenden beschriebenen Schleiftests sind nur Beispiele, um die überlegene Schleifleistung aufzuzeigen. Selbstverständlich kann das erfindungsgemäße Material auch in vielen anderen Anwendungsfällen erfolgreich eingesetzt werden.

Keramisch gebundene Schleifscheiben mit dem erfindungsgemäßen Material wurden im Trockenschliff zum Werkzeugschleifen eingesetzt. Das Werkstück bestand aus Stahl mit einer Rockwellhärte von HRC 65.

Die Zustellung wurde konstant gehalten und der Kehrwert der Leistungsaufnahme als Gütemaß verwendet. Dieser Wert, bezogen auf das Vergleichsmaterial ohne Cr-Zusatz (Beispiel 15), ist in Prozent angegeben.

Weiters wurden die Materialien aus Beispiel 4, 5, 16 und 21 zu Fiberscheiben (Durchmesser 178 mm) verarbeitet und zum Flachschleifen von Normalstahl verwendet. Die Gesamtabtragsmenge in g nach 90 Schleifzyklen wurde als Gütemaß verwendet. Das Werkstück hatte einen Durchmesser von 25 mm. Als Vergleichsmaterial wurde ein handelsüblicher Sol-Gel-Korund und ein Halbedelkorund eingesetzt.
Die erhaltenen Werte sind in den Tabellen angeführt und zeigen deutlich die hervorragenden Schleifleistungen der erfindungsgemäß hergestellten Materialien.

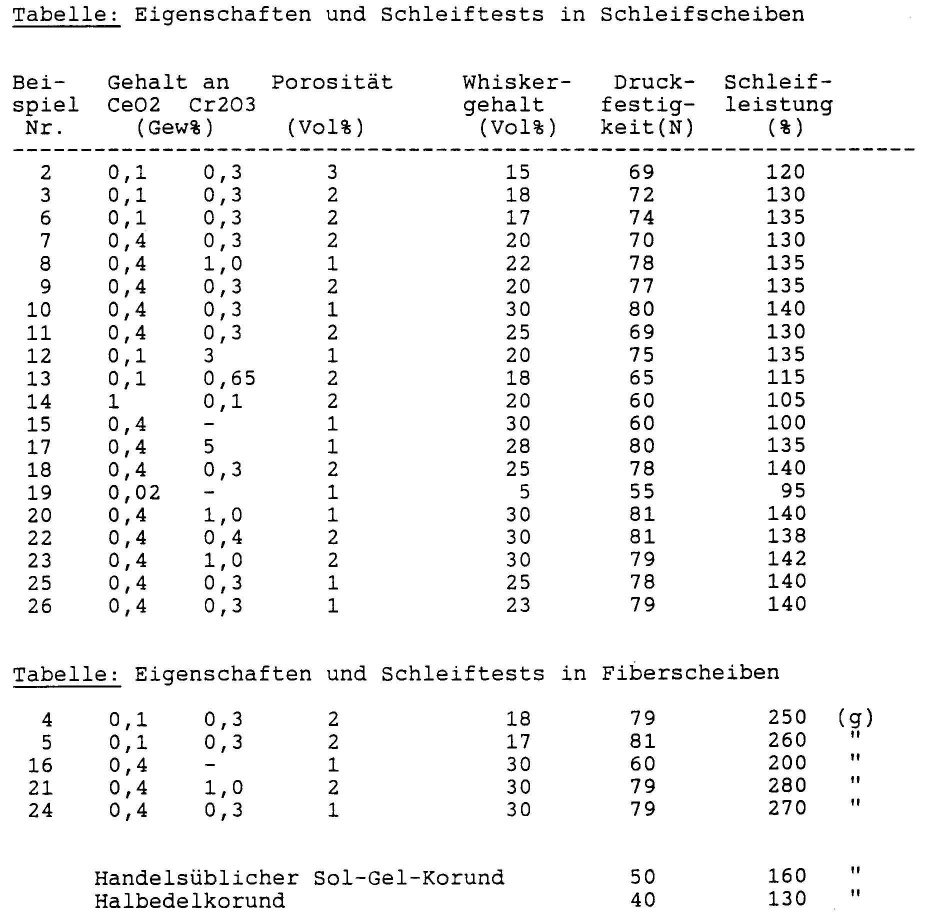

## Patentansprüche

1. Gesintertes mikrokristallines keramisches Material auf der Basis von α-Al₂O₃, bestehend aus einer mikrokristallinen Matrix und 0,1 - 30 Vol.%, vorzugsweise 1 - 25 Vol.% und besonders vorzugsweise 1 - 15 Vol.%, in der Matrix einegelagerter whiskerähnlicher Nadeln bzw. Plättchen, wobei das keramische Material einen Zusatz von 0,01 bis 2 Gew.%, vorzugsweise 0,01 bis 0,5 Gew.% einer Cer-Verbindung enthält, welche im wesentlichen in den Whiskern vorliegt, dadurch gekennzeichnet, daß das keramische Material einen Zusatz von 0,01 bis 15 Gew.%, vorzugsweise 0,1 bis 3 Gew.% einer Chrom-Verbindung aufweist.

2. Keramisches Material nach Anspruch 1, dadurch gekennzeichnet, daß die whiskerähnlichen Nadeln auch Calcium und/oder Magnesium enthalten.

3. Keramisches Material nach einem der Ansprüche 1 bis 2, dadurch gekennzeichnet, daß die Cer-Verbindung ein Oxid ist und/oder daß die Chrom-Verbindung ein Oxid ist.

4. Keramisches Material nach einem der Ansprüche 1 bis 3, dadurch gekennzeichnet, daß der Anteil der Cer-Verbindung in den Whiskern bis zu 20 Gew.%, vorzugsweise bis zu 10 Gew.% beträgt, wobei die Kristallitengröße im wesentlichen unter 1 µm, vorzugsweise unter 0,5 µm beträgt.

5. Verfahren zur Herstellung eines keramischen Materials durch Einrühren eines hochdispersen α-Aluminiumoxidhydrats in eine verdünnte Säurelösung, Zugabe einer Cerverbindung im Ausmaß 0,01 - 2 Gew.-%, vorzugsweise 0,01 - 0,5 Gew.-% (gerechnet als CeO₂) bezogen auf den Aluminiumoxidgehalt, Entlüftung, Desagglomerierung, Trocknung und Zerkleinerung, sowie Durchführung eines mehrstufigen, teilweise unter Gasdruck stattfindenden Sintervorganges in einer vorzugsweise nichtoxidierenden oder reduzierenden Atmosphäre, dadurch gekennzeichnet, kennzeichnet, daß zur Suspension eine Chromverbindung im Ausmaß von 0,01 bis 15 Gew.%, vorzugsweise 0,1 bis 3 Gew.%, bezogen auf das Al₂O₃, zugegeben wird.

6. Verfahren nach Anspruch 5, dadurch gekennzeichnet, daß zur α-Aluminiumoxidhydratsuspension neben dem Cerzusatz noch bis zu 5 Gew.%, vorzugsweise bis zu 2 Gew.%, bezogen auf das Al₂O₃, feinste Partikel eines Keimbildners oder einer Vorstufe davon zugegeben werden.

7. Verfahren nach Anspruch 6, dadurch gekennzeichnet, daß als Keimbildner ein Al₂O₃-Cr₂O₃-Mischkristall eingesetzt wird, der vorzugsweise bis zu 99 Gew% Cr₂O₃ enthält.

8. Verfahren nach Anspruch 5, dadurch gekennzeichnet, daß die zugesetzte Chromverbindung ganz oder teilweise aus Al₂O₃-Cr₂O₃-Mischkristallen besteht.

9. Verfahren nach einem der Ansprüche 5 bis 8, dadurch gekennzeichnet, daß der Sinterungsprozeß mehrstufig bei Temperaturen zwischen 500°C und 1400°C durchgeführt wird, wobei der Trocknungs- und Sinterungsprozeß vorzugsweise durch Mikrowellen erfolgt.

10. Verfahren nach Anspruch 9, dadurch gekennzeichnet, daß die Sinterung in Stufe zwei und vier bei einem Gasdruck von 1 bis 1000 bar, vorzugsweise 50 - 100 bar während fünf Minuten bis maximal drei Stunden erfolgt, wobei die Temperatur in der ersten Druckstufe, das ist die Stufe zwei, zwischen 800°C und 1150°C und in der zweiten Druckstufe, das ist die Stufe vier, zwischen 1250°C und 1400°C eingestellt wird.

11. Verfahren nach Anspruch 5, dadurch gekennzeichnet, daß das calcinierte Produkt auf bis zu 1650°C erhitzt, danach mit einer Abkühlungsgeschwindigkeit von mindestens 100°C/min rasch abgekühlt und dann bei 1100°C bis 1400°C fertiggesintert wird.

12. Verfahren nach einem der Ansprüche 5 bis 11, dadurch gekennzeichnet, daß der Feststoffgehalt der Suspension zwischen 5 und 40 Gew%, vorzugsweise zwischen 15 und 25 Gew% liegt.

13. Verwendung eines gesinterten, mikrokristallinen, keramischen Materials nach einem der Ansprüche 1 bis 4 als Schleifmaterial, Schneidkeramik und für andere Einsatzzwecke von α-Aluminiumoxidkeramik.

## Claims

1. Sintered microcrystalline ceramic material based on α-Al₂O₃, consisting of a microcrystalline maxtrix and 0.1 - 30 volume percent, preferably 1 - 25 volume percent and particularly preferable 1 - 15 volume percent whisker-like needles or small plates embedded in the matrix, whereby the ceramic material contains an additive of 0.01 to 2 percent by weight, preferably 0.01 to 0.5 percent by weight of a cerium compound, which compound is substantially present in the whiskers, characterized in that the ceramic material comprises an additive of 0.01 to 15 percent by weight, preferably 0.1 to to 3 percent by weight of a chromium compound.

2. A ceramic material as claimed in claim 1, characterized in that the whisker-like needles also contain calcium and/or magnesium.

3. A ceramic material as claimed in one of the claims 1 to 2, characterized in that the cerium compound is an oxide and/or that the the chromium compound is an oxide.

4. A ceramic material as claimed in one of the claims 1 to 3, characterized in that the proportion of the cerium compound in the whiskers can be up to 20 percent by weight, preferably up to 10 percent by weight, with the crystallite size being substantially less than 1 µm, preferably less than 0.5 µm.

5. A method for manufacturing a ceramic material by mixing a highly disperse α-aluminium oxide hydrate into a diluted acid solution, by adding a cerium compound of 0.01 - 2 percent by weight, preferably 0.01 - 0.5 percent by weight (calculated as CeO₂) referring to the aluminium oxide content, by deaeration, desagglomeration, drying and comminution as well as by carrying out a multi-stage sintering process partly taking place under gas pressure, preferably in a non-oxidizing or reducing atmosphere, characterized in that a chromium compound of 0.01 to 15 percent by weight, preferably 0.1 to 3 percent by weight, referring to the Al₂O₃, is added to the suspension.

6. A method as claimed in claim 5, characterized in that up to 5 percent by weight, preferably up to 2 percent by weight, referring to the Al₂O₃, of ultra-fine particles of a nucleating agent or a precursor thereof is added to the α-aluminium oxide hydrate suspension in addition to the cerium additive.

7. A method as claimed in claim 6, characterized in that an Al₂O₃-Cr₂O₃ mixed crystal is used as nucleating agent, which contains up to 99 percent by weight Cr₂O₃.

8. A method as claimed in claim 5, characterized in that the added chromium compound consists either in part or in full of Al₂O₃-Cr₂O₃ mixed crystals.

9. A method as claimed in one of the claims 5 to 8, characterized in that the sintering process is carried out in several stages at temperatures between 500°C and 1400°C, with the drying and sintering process preferably occuring by microwaves.

10. A method as claimed in claim 9, characterized in that the sintering in stage two and four is carried out at a gas pressure of 1 to 1000 bar, preferably 50 to 100 bar, for a period of five minutes up to a maximum of three hours, with the temperature in the first pressure stage, i.e. stage two, being set between 800°C and 1150°C and in the second pressure stage, i.e. stage four, being set between 1250°C and 1400°C.

11. A method as claimed in claim 5, characterized in that the calcined product is heated up to 1650°C, thereafter rapidly cooled with a cooling speed of at least 100°C/min and then finally sintered at 1100 to 1400°C.

12. A method as claimed in one of the claims 5 to 11, characterized in that the solids content of the suspension lies between five and 40 percent by weight, preferably between 15 and 25 percent by weight.

13. Use of a sintered microcrystalline ceramic material as claimed in one of the claims 1 to 4 as abrasive material, cutting ceramics or other purposes for α-aluminium oxide ceramics.

## Revendications

1. Matériau céramique microcristallin fritté à base d'α-Al₂O₃, constitué d'une matrice microcristalline et de 0,1 à 30 % en volume, de préférence de 1 à 25 % en volume et tout particulièrement de 1 à 15 % en volume d'aiguilles ou de plaquettes de type trichites incorporées dans la matrice, le matériau céramique étant additionné de 0,01 à 2 % en poids et de préférence de 0,01 à 0,5 % en poids d'un composé du cérium, qui pour l'essentiel se trouve dans les trichites, caractérisé en ce que le matériau céramique a été additionné de 0,01 à 15 et de préférence de 0,1 à 3 % en poids d'un composé du chrome.

2. Matériau céramique selon la revendication 1, caractérisé en ce que les aiguilles de type trichite contiennent du calcium et/ou du magnésium.

3. Matériau céramique selon l'une des revendications 1 et 2, caractérisé en ce que le composé du cérium est un oxyde et/ou que le composé du chrome est un oxyde.

4. Matériau céramique selon l'une des revendications 1 à 3, caractérisé en ce que le pourcentage du composé du cérium dans les trichites peut aller jusqu'à 20 et de préférence jusqu'à 10 % en poids, la taille des cristallites étant pour l'essentiel inférieure à 1 et de préférence inférieure à 0,5 µm.

5. Procédé pour préparer un matériau céramique par délayage d'un oxyde d'aluminium a hydraté hautement dispersé dans une solution diluée d'un acide, addition d'un composé du cérium en une quantité de 0,01 à 2 et de préférence de 0,01 à 0,5 % en poids (exprimée en CeO₂) par rapport à l'oxyde d'aluminium contenu, dégazage, désagglomération, séchage et broyage, et mise en oeuvre d'une opération de frittage en plusieurs étapes, ayant lieu en partie sous pression gazeuse, dans une atmosphère de préférence non oxydante ou réductrice, caractérisé en ce qu'on ajoute à la suspension un composé du chrome en une quantité de 0,01 à 15 et de préférence de 0,1 à 3 % en poids par rapport à l'Al₂O₃.

6. Procédé selon la revendication 5, caractérisé en ce que, outre le cérium, on ajoute encore à la suspension de l'oxyde d'aluminium α-hydraté jusqu'à 5 % en poids et de préférence jusqu'à 2 % en poids, par rapport à l'Al₂O₃, de particules très fines d'un agent de germination ou d'un précurseur de ce dernier.

7. Procédé selon la revendication 6, caractérisé en ce qu'on utilise comme agent de germination un cristal mixte Al₂O₃-Cr₂O₃, qui de préférence contient jusqu'à 99% en poids de Cr₂O₃.

8. Procédé selon la revendication 5, caractérisé en ce que le composé du chrome ajouté est en totalité ou en partie constitué de cristaux mixtes Al₂O₃-Cr₂O₃.

9. Procédé selon l'une des revendications 5 à 8, caractérisé en ce que l'opération de frittage est mise en oeuvre en plusieurs étapes à des températures de 500 à 1400°C, l'opération de séchage et de frittage étant de préférence mise en oeuvre à l'aide de micro-ondes.

10. Procédé selon la revendication 9, caractérisé en ce que le frittage est, dans les étapes 2 et 4, effectué sous une pression gazeuse de 1 à 1000 et de préférence de 50 à 100 bar pendant 5 minutes à un maximum de 3 heures, la température dans la première étape sous pression, c'est-à-dire l'étape 2, étant ajustée entre 800 et 1150°C, et la température dans la deuxième étape sous pression, c'est-à-dire l'étape 4, étant ajustée entre 1250 et 1400°C.

11. Procédé selon la revendication 5, caractérisé en ce que le produit calciné est chauffé jusqu'à 1650°C, puis est rapidement refroidi à une vitesse de refroidissement d'au moins 100°C/min, puis est soumis à un frittage final à une température de 1100 à 1400°C.

12. Procédé selon l'une des revendications 5 à 11, caractérisé en ce que la teneur en extrait sec de la suspension est comprise entre 5 et 40 et de préférence entre 15 et 25 % en poids.

13. Utilisation d'un matériau céramique microcristallin fritté selon l'une des revendications 1 à 4 comme produit abrasif, plaquette en céramique et pour d'autres applications des céramiques d'oxyde d'aluminium α.
